# EUROPÄISCHE PATENTSCHRIFT

(11) **EP 0 413 947 B1**
(45) Veröffentlichungstag und Bekanntmachung des Hinweises auf die Patenterteilung: **08.09.1993**
(21) Anmeldenummer: 90113458.5
(22) Anmeldetag: 13.07.1990
(51) Int. Cl.: B09B 3/00, A62D 3/00

(54) **Verfahren sowie Vorrichtung zur Reinigung von schadstoffhaltigen Böden**
Method and device for cleaning soils, contaminated by pollutants
Procédé et dispositif de nettoyage de sols, contaminés par des polluants

(30) Priorität: 19.08.1989 DE 3927418
(43) Veröffentlichungstag der Anmeldung: 27.02.1991
(73) Patentinhaber: Philipp Holzmann AG, 60329 Frankfurt (DE)
(72) Erfinder:
(74) Vertreter: Stenger, Watzke & Ring Patentanwälte

(56) Entgegenhaltungen:
- WO-A-86/01439
- DE-U- 8 804 344
- US-A- 4 582 611

## Beschreibung

Die Erfindung betrifft ein Verfahren sowie eine Vorrichtung zur Reinigung von schadstoffhaltigen Böden.

Es sind bereits Verfahren zur Reinigung von schadstoffhaltigen Böden bekannt, bei denen mittels eines unter hohem Druck in den Boden injizierten Strahles aus Wasser oder Reinigungsmedium die Schadstoffe von den Bodenpartikeln in einer Art Wäsche getrennt werden. Das entstehende Gemisch aus Reinigungsmedium, Schadstoffen und teilweise Bodenpartikeln wird sodann ganz oder teilweise an die Bodenoberfläche gefördert, wo dann anschließend in einer Aufbereitungsstation eine Wiederaufarbeitung des verwendeten Wassers oder Reinigungsmediums stattfindet. Die abgetrennten Schadstoffe werden dann ggf. auf einer geeigneten Deponie gelagert. Da es bei diesem bekannten Verfahren nicht zu vermeiden ist, daß neben dem mit Schadstoffen beladenen Reinigungsmedium auch Bodenpartikel an die Bodenoberfläche transpartiert werden, müssen diese dem Boden entzogenen Bestandteile, z.B. Schluff, Sand, nach vollständiger Reinigung in der Aufarbeitungsstation in den Boden zurückgeführt oder durch Zusatzstoffe ersetzt werden.

Weiterhin sind Bodenreinigungsverfahren an Ort und Stelle (in situ) bekannt, die sich der Möglichkeit eines mikrobiologischen Abbaues bestimmter Schadstoffgruppen bedienen, indem über eine gezielte Infiltration von Nährstoffen in den Boden von der Bodenoberfläche aus oder aus dafür eigens hergerichteten Infiltrationsbrunnen die im Boden natürlicherweise vorhandenen Mikroorganismen zu einer verstärkten Stoffwechselaktivität angeregt werden. In einer Ausgestaltung dieses bekannten Verfahrens werden auch die für die Behandlung vorgesehenen Mikroorganismen zusätzlich zu den Nährstoffen in den Boden infiltriert.

Bezüglich seines Aufbaues ist ein natürlich gewachsener Boden als inhomogen und anisotrop anzusprechen. Übergänge zwischen verschiedenen Bodenschichten sind zumeist abrupt und diskontinuierlich. Die unterschiedlichen Durchlässigkeiten, anisotropen Eigenschaften sowie Affinitäten und Adsorptionsneigungen der Bodenschichten gegenüber einer Verunreinigung oder deren wässriger Lösung oder Suspension bedingen oftmals erhebliche Behinderungen bei der Durchführung mikrobiologischer in situ Verfahren oder sogar deren Versagen. Nicht selten sind auch gerade jene Bodenschichten besonders intensiv mit Schadstoffen belastet, welche die geringste Durchlässigkeit aufweisen. Liegen daher Bodenzonen unterschiedlicher Permeabilität vor, so neigen zugeführte Substanzen und Mikroorganismen in wässriger Lösung dazu, sich vorrangig in Bodenschichten hoher Strömungsdurchlässigkeit zu bewegen und aufzuhalten, in denen nicht unbedingt die stärkste Schadstoffbelastung vorherrscht.

Nahezu undurchlässige Bodenschichten können den Erfolg mikrobiologischer in situ Verfahren einschränken oder sogar den Kontakt zwischen Schadstoffen und Mikroorganismen gänzlich verhindern.

In der internationalen Patentanmeldung WO-A-8601439 ist ein Verfahren zur in-situ-Bodenreinigung offenbart, bei dem unter Verbleiben des Bodens an Ort und Stelle eine mechanisch betriebene Auflockerung des Bodengefüges erfolgt. Hierzu wird ein Bodenreinigungsgerät mit einem vertikalen Bohrgestänge verwendet, an dessen unterem Ende sich eine Bohrkrone sowie ein mit Schneidkanten versehener Rotor ähnlich einem Mixer befinden. Im Bereich des Rotors ist eine Austrittsöffnung angeordnet, über die während der Betätigung des Rotors eine Flüssigkeit zur Behandlung des kontaminierten Bodens abgegeben werden kann. Über die Austrittsöffnung lassen sich verschiedene Chemikalien sowie Mikroorganismen, eventuell unter Beigabe geeigneter Nährstoffe, in die mechanisch aufbereitete Bodenzone einbringen. Zur Zuführung der Chemikalien bzw. Mikroorganismen ist das Bohrgestänge innen hohl ausgebildet.

Bei diesem bekannten Aufbereitungsverfahren wird der Boden durch die mit Fräskanten versehenen Rotoren einer extremen mechanischen Beanspruchung unterzogen. Trotz dieser intensiven Bearbeitung des Bodens wird keine besonders gleichmäßige Vertailung der über die Austrittsöffnung zugeführten Wirkstoffe erreicht.

Die Druckschrift DE-U 88 04 344 offenbart ein Bodenreinigungsverfahren, bei dem die Auflockerung des Bodengefüges durch einen unter hohem Druck aus einem Bohrrohr austretenden Flüssigkeitstrahl erfolgt. Die an den Bodenkörnern haftenden Schadstoffe werden durch die Kraft des Flüssigkeitsstrahls an Ort und Stelle gelöst bzw. abgetrennt und gelangen anschließend in den Bereich einer an dem Bohrrohr ausgebildeten Absaugöffnung. Über die Absaugöffnung wird Flüssigkeit zusammen mit den darin gelösten Schadstoffen an die Bodenoberfläche zurückgeführt, wo dann eine Aufbereitung der verwendeten Reinigungsflüssigkeit erfolgt.

Der Erfindung liegt die **Aufgabe** zugrunde, ein Verfahren zur Reinigung von schadstoffhaltigen Böden zu schaffen, mit dem eine besonders homogene Verteilung der jeweiligen Wirkstoffe innerhalb des Bodengefüges erreicht wird. Außerdem soll eine geeignete Vorrichtung zur Durchführung des Verfahrens geschaffen werden.

Zur technischen **Lösung** dieser Aufgabe wird ein Verfahren sowie eine Vorrichtung mit den in dem Ansprüchen 1 und 5 genannten Merkmaler vorgeschlagen.

Durch das Auflockern des Bodengefüges ergibt sich eine Homogenisierung und Erhöhung der Permeabilität des Bodens, wodurch eine Voraussetzung für eine gezielte und wirksame Zufuhr des Wirkstoffes geschaffen ist. Der Wirkstoff selbst wird unter Verwendung der Flüssigkeit als Träger- und Transportmedium in das durch die Auflockerung vergleichmäßigte Bodengefüge eingebracht, wodurch eine homogene Verteilung des Wirkstoffes im Boden erreicht wird.

Unter "Wirkstoff" wird ein Stoff verstanden, der eine biologische, chemische oder physikalische Beseitung oder Umwandlung des Schadstoffes bzw. eine Kombination hiervon bewirkt. Im einzelnen kann es sich bei den Wirkstoffen beispielsweise um Abbaustoffe handeln. Hierzu zählen Mikroorganismen, Nähr- und Hilfsstoffe zur Stimulierung des Wachstums vorhandener und/oder zugeführter Mikroorganismen sowie Chemikalien, die den chemischen Abbau oder Umbau von Schadstoffverbindungen bewirken. Außerdem ist eine Zugabe von Lösungsmitteln oder Stoffen zur Erhöhung der Strömungsdurchlässigkeit des Bodens möglich. Zur Schadstoffmobilisierung lassen sich außerdem Gase einschließlich Luft in den Boden einbringen. Zu den physikalisch wirkenden Wirkstoffen zählen Verfestigungsmittel zur Schadstoffixierung an den jeweiligen Bodenpartikeln. Schließlich ist es möglich, zur Neutralisierung der schadstoffbelasteten Bodenkörner Wirkstoffe in den Boden zu injizieren, die einen das jeweilige Bodenkorn einkapselnden Mantel bilden.

Das erfindungsgemäße Verfahren unterstützt die Einbringung derartiger Wirkstoffe, indem der zu behandelnde Boden mittels des unter hohem Druck in den Boden eingespritzten Flüssigkeitsstrahles homogenisiert wird. Hierduch ist eine isotrope und kontinuierliche Verteilung des Wirkstoffes sichergestellt, so daß chemische, physikalische oder biologische Prozesse in Gang gesetzt werden, die zu einem Abbau der Schadstoffe oder deren Umwandlung in ungefährliche Reaktionsprodukte führen.

Von dem bekannten in situ Verfahren zur Bodenwäsche unterscheidet sich das erfindungsgemäße Verfahren dadurch, daß Bodenbestandteile und Schadstoffe nicht an die Bodenoberfläche gefördert werden müssen, so daß dort keine Reststoffe anfallen.

Der Vorteil gegenüber bekannten in situ Verfahren durch Infiltration von Nährstoffen und/oder Mikroorganismen besteht in der Umgehung des langsamen und oft nicht wirksamen Strömungsvorganges und dessen Ersatz durch einen hochwirksamen Transportmechanismus für sämtliche erforderlichen Wirkstoffe, wobei durch diesen Transportmechanismus zugleich die Bodenstruktur aufgelockert und homogenisiert wird.

Bei einer Ausgestaltung des Verfahrens wird das Auflockern des Bodengefüges und das gleichzeitige Einbringen mindestens eines Wirkstoffes an die im aufgelockerten Boden befindlichen Schadstoffe zeitlich aufeinanderfolgend mehrfach vorgenommen. Auf diese Weise ist es beispielsweise möglich, Mikroorganismen und diese versorgende Nährstoffe nacheinander in den bereits aufgelockerten Boden einzubringen. Eine weitere Möglichkeit der Anwendung besteht darin, zuerst in den bereits gelockerten Boden Lösungsmittel zu injizieren, und daran anschließend den auf die bereits gelösten Schadstoffe einwirkenden Wirkstoff hinzuzugeben.

Bei einer Weiterentwicklung des Verfahrens ist vorgesehen, daß zur Abfuhr der der Auflockerung des Bodengefüges und dem Transport des Wirkstoffes dienenden Flüssigkeit aus dem Boden mindestens eine Wasserhaltungsmaßnahme zur Erzeugung eines Strömungsgefälles eingerichtet und betrieben wird. Diese Wasserhaltungsmaßnahme kann beispielsweise aus einem in den Boden eingelassenen Brunnenrohr bestehen, das ein dauerndes, trichterförmiges Strömungsgefälle innerhalb des Bodens aufrechterhält. Die als Träger- und Transportmedium dienende Flüssigkeit, z.B. Wasser, sammelt sich infolge des unterirdischen Strömungsfeldes im Brunnen an und wird von dort an die Bodenoberfläche zurücktransportiert.

Hierbei kann es vorteilhaft sein, die abgezogene Flüssigkeit wieder in den Injektionskreislauf einzuführen ggf. nach erneuter Zugabe von Wirkstoff. Da die Schadstoffe an Ort und Stelle im Boden verbleiben, ist eine Reinigung der mittels der Wasserhaltungsmaßnahme abgezogenen Flüssigkeit in der Regel nicht erforderlich, da diese nur die noch nicht abgegebenen Wirkstoffanteile enthält.

Weitere Einzelheiten und Vorteile des Gegenstandes der Erfindung ergeben sich aus der nachfolgenden Beschreibung der zugehörigen Zeichnungen, in denen eine bevorzugte Ausführungsform des erfindungsgemäßen Verfahrens sowie zwei zur Durchführung des Verfahrens geeignete Vorrichtungen dargestellt sind. In den Zeichnungen zeigen:
- Fig. 1: in einer Aufsicht eine schematische Darstellung eines fortschreitenden Verfahrens zur Reinigung schadstoffhaltiger Böden mit einem senkrecht in den Boden eingetriebenen Bohrrohr sowie einer Wasserhaltungsmaßnahme in Form eines Brunnenrohres;
- Fig. 2: einen senkrechten Querschnitt durch die Bodenformation entsprechend Fig. 1 durch die Ebene von Bohrrohr und Brunnenrohr;
- Fig. 3: eine teilweise geschnittene Darstellung des Bohrrohres in einer ersten Ausführungsform und

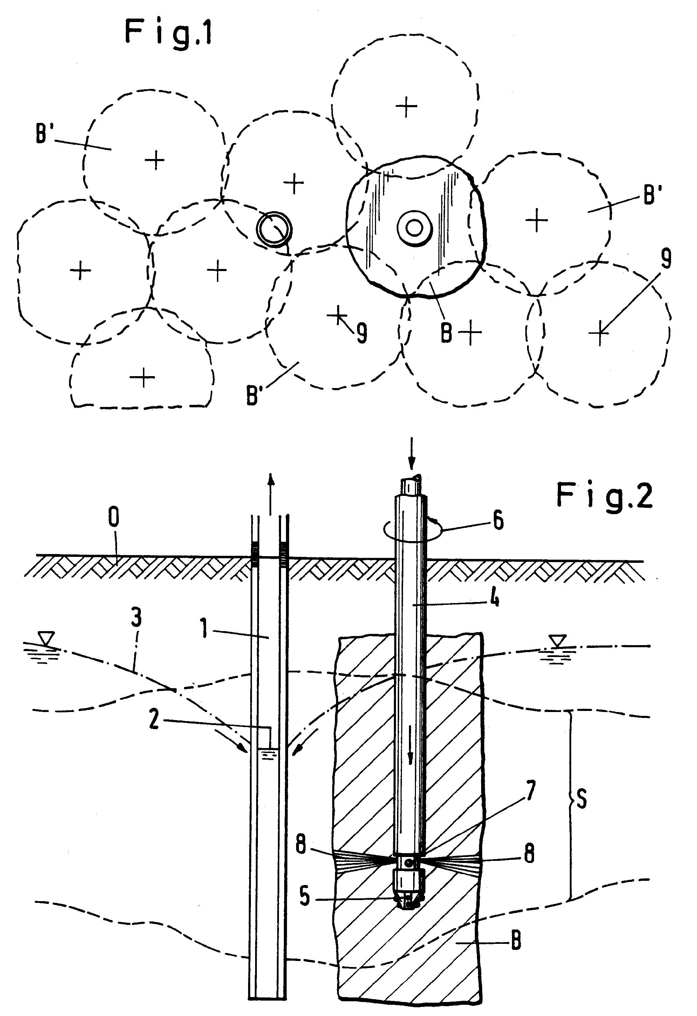

In dem in Figur 2 dargestellten, senkrechten Schnitt durch eine Bodenformation ist der mit Schadstoffen belastete Bodenbereich (S) unterhalb der Bodenoberfläche (O) gestrichelt dargestellt. In den Boden ist ein Brunnenrohr 1 eingelassen, dessen Wasserspiegel 2 durch Abpumpen unterhalb des Flüssigkeitsspiegels im Boden gehalten wird, so daß sich ein in Fig. 2 strichpunktiert dargestelltes, unterirdisches Strömungsgefälle 3 in Form eines das Brunnenrohr 1 umgebenden Trichters einstellt.

Ein Bohrrohr 4 wird mittels einer an seiner Spitze befestigten Bohrkrone 5 unter gleichzeitiger Drehbewegung 6 in den Boden eingetrieben. Sobald ein knapp oberhalb der Bohrkrone 5 angeordneter, mit Austrittsdüsen 7 versehener Abschnitt des Bohrrohres 4 in den mit Schadstoffen belasteten Bodenbereich (S) gelangt, wird eine mittels einer Hochdruckpumpe durch das Bohrrohr 4 hindurchtransportierte Flüssigkeit unter hohem Druck über die Austrittsdüsen 7 in den Boden eingespritzt. Der vorzugsweise radial aus dem Bohrrohr 4 austretende Flüssigkeitsstrahl 8 bestreicht infolge der Drehbewegung 6 des Bohrrohres 4 und dessen gleichzeitiger Absenkung einen zylindrischen Bodenkörper (B), in dem durch die schneidende und verwirbelnde Wirkung des Flüssigkeitsstrahles 8 eine Auflockerung und Homogenisierung des Bodengefüges eintritt. Dabei wird der Durchmesser des in etwa zylindrischen Bodenkörpers (B) durch die Reichweite der Wirkung des Flüssigkeitsstrahles 8 bestimmt.

Der Flüssigkeit ist ein Wirkstoff beigefügt, wobei die unter hohem Druck stehende Flüssigkeit selbst als Trägermedium dient und den Wirkstoff innerhalb des Bodenkörpers (B) transportiert und homogen verteilt.

Der Wirkstoff oder das Agenz gelangt auf diese Weise zu den an den Bodenpartikeln haftenden Schadstoffen und wirkt auf diese ein, indem die Schadstoffe chemisch, physikalisch oder biologisch abgebaut und/oder umgewandelt werden. Die einzig zur Auflockerung und als Träger- und Transportmedium dienende Flüssigkeit unterliegt dabei der Wirkung des durch das Brunnenrohr 1 künstlich aufrechterhaltenen Strömungsgefälles 3 und wird über das Brunnenrohr 1 kontinuierlich an die Bodenoberfläche (O) zurückgeführt. Die zurückgeführte Flüssigkeit weist noch jene Anteile an Agenzien auf, die noch nicht mit den Schadstoffen in Wirkverbindung getreten sind. Die an die Bodenoberfläche (O) zurückgeführte Flüssigkeit wird in einer entsprechenden Vorrichtung mit weiterem Wirkstoff angereichert bzw. ergänzt und wiederum über das Bohrrohr in den kontaminierten Bodenkörper (B) eingebracht.

In Fig. 1 ist dargestellt, daß das voranstehend beschriebene Verfahren fortschreitend durchgeführt wird, indem das Bohrrohr 4 aufeinanderfolgend an verschiedenen Stellen 9 in den Boden eingetrieben wird, so daß durch die Vielzahl der dabei behandelten Bodenkörper (B') ein flächendeckendes Bodenreinigungsverfahren entsteht. Selbstverständlich ist es möglich, zur Beschleunigung des Reinigungsverfahrens zugleich mit mehreren Bohrrohren zu arbeiten. In schwer zugänglichen Bodenbereichen, beispielsweise unterhalb von Bauten, läßt sich der Wirkstoff auch über ein schräg in den Boden eingetriebenes Bohrrohr verteilen. Nachdem der zu reinigende Bodenbereich in der beschriebenen Weise behandelt ist, kann das Verfahren mit dem gleichen oder einem anderen Wirkstoff ganz oder teilweise wiederholt werden.

Als Wasserhaltungsmaßnahme kommt neben der Verwendung des Brunnenrohres 1 auch die Anwendung anderer Dränagemaßnahmen, beispielsweise ein um den mit Schadstoffen belasteten Bodenbereich herum gezogener Graben, in Frage.

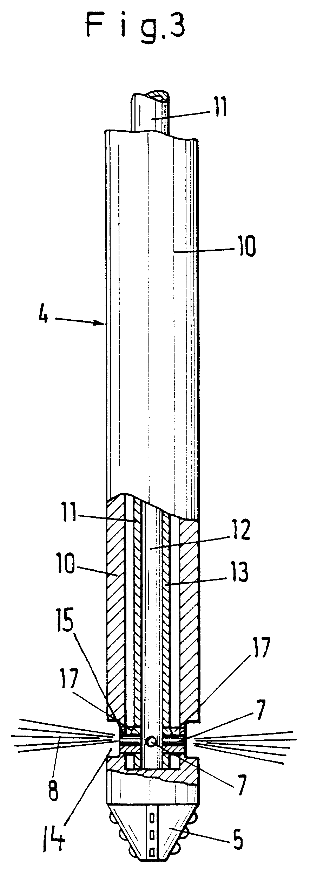

Das in Figur 3 im Detail dargestellte Bohrrohr 4 verfügt über einen Außenmantel 10 und einen hierzu konzentrischen Innenmantel 11. Der Innenmantel 11 umschließt einen zylindrischen Zuführkanal 12, während zwischen Innenmantel 11 und Außenmantel 10 ein ringförmiger weiterer Zuführkanal 13 besteht.

Knapp oberhalb der Bohrkrone 5 weist das Bohrrohr 4 einen bezüglich seines Querschnittes verengten Abschnitt 14 auf, in den radial die Austrittsdüsen 7 münden. Bei der Ausführung entsprechend Figur 3 sind die Austrittsdüsen 7 jeweils an einer radial angeordneten Hülse 15 ausgebildet, deren Bohrung in den zentralen Zuführkanal 12 mündet.

Wird das in Figur 3 dargestellte Bohrrohr 4 zur Durchführung des beschriebenen Verfahrens verwendet, so wird der Wirkstoff oder das Agenz über den ringförmigen weiteren Zuführkanal 13 zu den Austrittsöffnungen 17 geführt.

Bei dem Bohrrohr 4 entsprechend Fig. 3 gelangt der über den ringförmigen weiteren Zuführkanal 13 zuströmende Wirkstoff über als Mischdüsen ausgebildete Austrittsöffnungen 17 noch vor der Mündung der Austrittsdüsen 7 in die unter hohem Druck geförderte Flüssigkeit, so daß ähnlich dem Prinzip einer Wasserstrahlpumpe eine starke Verwirbelung und Vermischung des Wirkstoffes innerhalb der als Trägermedium dienenden Flüssigkeit eintritt.

### Bezugszeichenliste :

- 1: Brunnenrohr
- 2: Wasserspiegel
- 3: Strömungsgefälle
- 4: Bohrrohr
- 5: Bohrkrone
- 6: Drehbewegung
- 7: Austrittsdüse
- 8: Flüssigkeitsstrahl
- 9: Stelle
- 10: Außenmantel
- 11: Innenmantel
- 12: Zuführkanal
- 13: weiterer Zuführkanal
- 14: verengter Abschnitt
- 15: Hülse
- 17: Austrittsöffnung
- S: mit Schadstoffen belasteter Bodenbereich
- O: Bodenoberfläche
- B: Bodenkörper
- B': Bodenkörper

## Patentansprüche

1. Verfahren zur Reinigung von schadstoffhaltigen Böden (anthropogener und geogener Entstehung), bei dem ohne Transport des Bodens an die Bodenoberfläche (O) und unter Verwendung eines sich drehenden Bohrrohres (4) eine in vertikaler Richtung fortschreitende Auflockerung des Bodengefüges jeweils innerhalb mindestens eines Bodenkörpers (B) erfolgt, wobei während der Auflockerung ein den jeweiligen Schadstoff an Ort und Stelle abbauender und/oder umwandelnder Wirkstoff in das aufgelockerte Bodengefüge eingebracht wird, wobei die Schadstoffe im Boden verblechen und die Auflockerung des Bodengefüges erfolgt, indem eine unter hohem Druck stehende Flüssigkeit über eine an dem Bohrrohr (4) augebildete Düse (7) in das Bodengefüge eingebracht wird, wobei der aus der Düse (7) austretende Flüssigkeitsstrahl einen weitgehend zylindrischen Bodenkörper (B) überstreicht und hierbei den über einen eigenen Zufuhrkanal (13) im Bohrrohr (4) zugeführten Wirkstoff mitreißt und nach Art eines Träger- und Transportmediums innerhalb des zylindrischen Bodenkörpers (B) verteilt.

2. Verfahren nach Anspruch 1, dadurch gekennzeichnet, daß das Auflockern des Bodengefüges und das gleichzeitige Einbringen mindestens eines Wirkstoffes an die im aufgelockerten Boden befindlichen Schadstoffe zeitlich aufeinanderfolgend mehrfach vorgenommen wird.

3. Verfahren nach Anspruch 1 oder 2, dadurch gekennzeichnet, daß zur Abfuhr der der Auflockerung des Bodengefüges und dem Transport des Wirkstoffes dienenden Flüssigkeit aus dem Boden mindestens eine Wasserhaltungsmaßnahme (1) zur Erzeugung eines Strömungsgefälles eingerichtet und betrieben wird.

4. Verfahren nach Anspruch 3, dadurch gekennzeichnet, daß die abgezogene Flüssigkeit wieder in den Injektionskreislauf eingeführt wird.

5. Vorrichtung zur Durchführung des Verfahrens nach mindestens einem der Ansprüche 1 bis 4, mit einem mit einer Bohrkrone (5) versehenen Bohrrohr (4), in dem ein Zuführkanal (13) ausgebildet ist, der mit mindestens einer knapp oberhalb der Bohrkrone (5) angeordneten Austrittsöffnung (17) für einen den jeweiligen Schadstoff abbauenden und/oder umwandelnden Wirkstoff in Verbindung steht, und in dem ein weiterer Zuführkanal (12) ausgebildet ist, der mit einer Austrittsdüse (7) für eine unter hohem Druck aus dem Bohrrohr (4) austretende Flüssigkeit verbunden ist, wobei die Austrittsöffnung (17) in die Austrittsdüse (7) mündet.

## Claims

1. Process for cleaning pollutant-containing soils (of anthropogenous and geogenous origin), in which, without transporting the soil to the surface (O) and using a rotating drilling pipe (4), a loosening of the soil structure, progressing in the vertical direction, is in each case effected within at least one soil batch (B), an agent which breaks down and/or converts the respective pollutant on the spot being introduced, during the loosening, into the loosened soil structure, the pollutants remaining in the soil and the loosening of the soil structure being effected by a liquid subjected to high pressure being introduced into the soil structure, via a nozzle (7) configured on the drilling pipe (4), the jet of liquid issuing from the nozzle (7) sweeping over a broadly cylindrical soil batch (B) and thereupon entraining the agent supplied via a specific feed duct (13) in the drilling pipe (4) and dispersing it in the manner of a carrier and transporting medium within the cylindrical soil batch (B).

2. Process according to Claim 1, characterised in that the loosening of the soil structure and the simultaneous introduction of at least one agent to the pollutants located in the loosened soil is undertaken repeatedly in temporal succession.

3. Process according to Claim 1 or 2, characterised in that, in order to evacuate from the soil the liquid serving the loosening of the soil structure and the transportation of the agent, at least one water-raising arrangement (1) is set up and operated to produce a flow gradient.

4. Process according to Claim 3, characterised in that the drawn-off liquid is re-introduced into the injection circuit.

5. Device for the realisation of the process according to at least one of Claims 1 to 4, having a drilling pipe (4) provided with a drill bit (5), in which drilling pipe there is configured a feed duct (13), connected to at least one outlet opening (17) disposed just above the drill bit (5), for an agent which breaks down and/or converts the respective pollutant, and in which drilling pipe there is configured a further feed duct (12), connected to an outlet nozzle (7) for a liquid issuing under high pressure from the drilling pipe (4), the outlet opening (17) emerging into the outlet nozzle (7).

## Revendications

1. Procédé de nettoyage de sols contaminés par des polluants (d'origine anthropogène et géogène), dans lequel un ameublissement vertical progressif de la structure du sol est réalisé à l'intérieur d'au moins une portion de sol (B), sans amener le sol à la surface (O) du sol et en employant un tube de forage rotatif (4), une substance active destinée à dégrader et/ou à transformer le polluant sur place étant introduite dans la structure ameublie du sol pendant l'ameublissement, les polluants restant dans le sol, et l'ameublissement de la structure du sol étant réalisé en introduisant un liquide soumis à une haute pression dans la structure du sol par l'intermédiaire d'une buse (7) prévue sur le tube de forage (4), le jet de liquide émis par la buse (7) balayant une portion cylindrique de sol (B), entraînant la substance active amenée par un canal d'alimentation propre (13) du tube de forage (4) et la répartissant à l'intérieur de la portion cylindrique de sol (B) à la manière d'un agent porteur et transporteur.

2. Procédé selon la revendication 1, caractérisé en ce que l'ameublissement de la structure du sol et l'introduction simultanée d'au moins une substance active au niveau des polluants présents dans le sol ameubli sont réalisés à plusieurs reprises successivement dans le temps.

3. Procédé selon la revendication 1 ou 2, caractérisé en ce que, pour évacuer du sol le liquide servant à ameublir la structure du sol et à véhiculer la substance active, un dispositif de pompage (1) de l'eau est installé et actionné pour produire une pente d'écoulement.

4. Procédé selon la revendication 3, caractérisé en ce que le liquide extrait est réintroduit dans le circuit d'injection.

5. Dispositif de réalisation du procédé selon au moins l'une des revendications 1 à 4, comprenant un tube de forage (4) qui est muni d'une couronne de forage (5), dans lequel est prévu un canal d'alimentation (13) communiquant avec au moins une ouverture de sortie (17) située juste au-dessus de la couronne de forage (5) et destinée à une substance active permettant de dégrader et/ou de transformer le polluant, et dans lequel est ménagé un second canal d'alimentation (12) qui est relié à une buse de sortie (7) destinée à un liquide émis à haute pression par le tube de forage (4), l'ouverture de sortie (17) débouchant dans la buse de sortie (7).
